(19) Europäisches Patentamt
European Patent Office
Office européen des brevets

(11) **EP 4 364 083 B1**

(12) **FASCICULE DE BREVET EUROPEEN**

(45) Date de publication et mention de la délivrance du brevet:
**27.11.2024 Bulletin 2024/48**

(21) Numéro de dépôt: **23721393.9**

(22) Date de dépôt: **21.04.2023**

(51) Classification Internationale des Brevets (IPC):
***G06T 3/40*** *(2024.01)*

(52) Classification Coopérative des Brevets (CPC):
**G06T 3/4015; G06T 3/403;** G06T 2207/10024;
G06T 2207/20012

(86) Numéro de dépôt international:
**PCT/EP2023/060515**

(87) Numéro de publication internationale:
**WO 2023/208783 (02.11.2023 Gazette 2023/44)**

(54) **PROCÉDÉ DE DÉMOSAÏQUAGE NON-LOCAL D'UNE IMAGE ET DISPOSITIF ASSOCIÉ**

VERFAHREN ZUR DURCHFÜHRUNG EINER NICHTLOKALEN DEMOSAICING EINES BILDES UND ZUGEHÖRIGE VORRICHTUNG

METHOD FOR PERFORMING NON-LOCAL DEMOSAICING OF AN IMAGE, AND ASSOCIATED DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.04.2022 FR 2203915**

(43) Date de publication de la demande:
**08.05.2024 Bulletin 2024/19**

(73) Titulaires:
• **Airbus Defence and Space SAS**
**31402 Toulouse Cedex 4 (FR)**
• **Centre National d'Etudes Spatiales**
**75001 Paris (FR)**

(72) Inventeurs:
• **GUILLAUME, Laurent**
**31402 TOULOUSE CEDEX 4 (FR)**
• **THIEBAUT, Carole**
**31000 TOULOUSE (FR)**
• **NGUYEN, Thien Anh**
**31000 TOULOUSE (FR)**

(74) Mandataire: **Plasseraud IP**
**104 Rue de Richelieu**
**CS92104**
**75080 Paris Cedex 02 (FR)**

(56) Documents cités:
• **HIRAKAWA K ET AL: "Joint demosaicing and denoising", IEEE TRANSACTIONS ON IMAGE PROCESSING, IEEE, USA, vol. 15, no. 8, August 2006 (2006-08-01), pages 2146 - 2157, XP002469895, ISSN: 1057-7149, DOI: 10.1109/TIP.2006.875241**
• **LEI ZHANG ET AL: "PCA-Based Spatially Adaptive Denoising of CFA Images for Single-Sensor Digital Cameras", IEEE TRANSACTIONS ON IMAGE PROCESSING, IEEE, USA, vol. 17, no. 4, April 2009 (2009-04-01), pages 797 - 812, XP011253057, ISSN: 1057-7149**
• **BUADES ANTONI ET AL: "CFA Video Denoising and Demosaicking Chain via Spatio-Temporal Patch-Based Filtering", IEEE TRANSACTIONS ON CIRCUITS AND SYSTEMS FOR VIDEO TECHNOLOGY, IEEE, USA, vol. 30, no. 11, 27 November 2019 (2019-11-27), pages 4143 - 4157, XP011817262, ISSN: 1051-8215, [retrieved on 20201028], DOI: 10.1109/TCSVT.2019.2956691**

## Description

### Domaine technique

La présente demande concerne un procédé de démosaïquage d'une image. Le procédé s'applique notamment au démosaïquage d'images dont les composantes sont disposées selon un motif de Bayer dans le domaine RVB.

### Technique antérieure

Une image obtenue par un capteur matriciel multi-spectral est généralement mosaïquée. Une image est par exemple acquise sous la forme de pixels à une composante de couleur ou « single color luminescence » en anglais et transformée par démosaïquage en pixels à plusieurs bandes spectrales ou « multiple color luminescence » en anglais. L'image initiale est ainsi formée d'un ensemble de pixels où chaque pixel de l'image ne correspond qu'à une bande spectrale parmi les bandes spectrales pouvant être acquises sur d'autres pixels du capteur matriciel multi-spectral, chaque pixel du capteur matriciel multi-spectral n'acquérant qu'une partie de l'information multi-spectrale.

Un cas typique est celui des capteurs organisés selon la matrice de Bayer, qui est composée de filtres verts à 50% et de filtres rouges et bleus à 25% chacun. Dans une matrice de Bayer, chaque groupe carré de quatre pixels comprend deux pixels verts en diagonale, et un pixel rouge et un bleu sur l'autre diagonale. Dans cet exemple, le démosaïquage vise donc à interpoler les deux valeurs manquantes parmi le rouge, le vert, et le bleu, pour chaque pixel de l'image initiale.

Diverses techniques de démosaïquage ont déjà été proposées. On connaît notamment la méthode, dite de Hamilton-Adams, décrite dans la publication de J. Hamilton Jr et J. Adams Jr., « Adaptive color plan interpolation in single sensor color-electronic caméra, 1997 », correspondant au brevet US 5,629,734.

On connaît également la publication de A. Buades et al., « Self-similarity Driven Demosaicking », in Image Processing on Line, 2011-06-01, ISSN 2105-1232.

La publication par Hirakawa et Parks, "Joint demosaicing and denoising", IEEE TRANSACTIONS ON IMAGE PROCESSING, Aout 2006, p. 2146-2157, DOI : 10.1109/ TIP.2006.875241, divulgue une technique de débruitage et de démosaïquage simultanés par l'utilisation d'un filtre optimal qui est le même pour l'estimation de la valeur de chaque pixel débruité à partir d'une image monochrome, ainsi que pour l'estimation des canaux (R, V ou B) à partir d'une image en couleur (RVB).

La publication par Buades et Duran, "CFA Vidéo Denoising and Demosaicking Chain via Spatio-Temporal Patch-Based Filtering", IEEE TRANSACTIONS ON CIRCUITS AND SYSTEMS FOR VIDEO TECHNOLOGY, Novembre 2019, p. 4143-4157, DOI : 10.1109/ TCSVT.2019.2956691, divulgue une technique de débruitage et de démosaïquage simultanés appliqués à des séquences d'images. Cet article décrit également l'utilisation de débruitage par transformation de stabilisation de la variance du bruit ainsi que la détermination de patchs similaires. Cependant les patchs sont issus d'images différentes de la séquence et non pas d'une même image comme dans le procédé de l'invention,

Cependant, les méthodes proposées ne permettent généralement d'obtenir qu'une qualité d'image limitée et insuffisante notamment pour des applications spatiales telles que l'observation de la Terre.

### Résumé

Compte-tenu de ce qui précède, l'invention a pour but de proposer un procédé de démosaïquage d'images amélioré par rapport à l'état de la technique.

A cet égard, l'invention propose un procédé de démosaïquage appliqué à une image initiale présentant des pixels correspondants chacun à une bande spectrale initiale pour l'obtention d'une image démosaïquée à plusieurs bandes spectrales présentant des pixels correspondants chacun à ladite bande spectrale initiale ou à une bande spectrale interpolée,

caractérisé en ce qu'il comprend :

- une transformation de stabilisation de la variance du bruit, appliquée aux pixels des bandes spectrales initiales,
- sur la base d'une pluralité de patchs de référence prédéterminés et pour chaque patch de référence parmi la pluralité de patchs de référence :

  ○ une détermination d'un ensemble de patchs similaires audit patch de référence, en exploitant les pixels d'au moins une des bandes spectrales initiales transformées
  ○ une détermination d'une matrice de covariance dudit ensemble de patchs similaires et
  ○ pour chaque patch similaire dudit ensemble de patchs similaires, un calcul d'estimatifs des bandes spectrales interpolées, fonction d'une décomposition en bloc de la matrice de covariance, où la décomposition en quatre blocs est fonction du phasage de chaque patch similaire,

- une détermination des bandes spectrales interpolées par une agrégation des estimatifs des bandes spectrales interpolées, où on agrège les estimatifs des bandes spectrales interpolées pour chaque pixel et
- une transformation inverse de la transformation de stabilisation, appliquée aux pixels des bandes spectrales initiales transformées.

Selon une particularité de l'invention, la transformation de stabilisation de la variance du bruit est réalisée en fonction d'un modèle de bruit propre au détecteur.

Selon une autre particularité de l'invention, les patches de référence prédéterminés sont répartis de façon à couvrir une proportion déterminée de l'image.

Selon une autre particularité de l'invention, lors de la détermination de la matrice de covariance de l'ensemble des patchs similaires, les patchs similaires comprennent des bandes spectrales initiales transformées et des bandes spectrales intermédiaires, ces bandes spectrales intermédiaires étant issues d'un démosaïquage préalable par interpolation linéaire appliqué à l'image initiale stabilisée.

Selon une autre particularité de l'invention, la détermination dudit ensemble de patchs similaires à chaque patch de référence est déterminée par une fonction de similitude appliquée à une image intermédiaire résultant du démosaïquage préalable par interpolation linéaire de l'image initiale stabilisée, la fonction de similitude utilisant une ou plusieurs des bandes spectrales de l'image intermédiaire.

Selon une autre particularité de l'invention, lors de la détermination de la matrice de covariance de l'ensemble des patchs similaires, les patchs similaires comprennent des bandes spectrales initiales transformées et des bandes spectrales intermédiaires, ces bandes spectrales intermédiaires étant issues d'un démosaïquage préalable par interpolation linéaire et d'un débruitage préalable appliqués à l'image initiale stabilisée.

Selon une autre particularité de l'invention, la détermination dudit ensemble de patchs similaires à chaque patch de référence est déterminée par une fonction de similitude appliquée à une image intermédiaire résultant du démosaïquage préalable par interpolation linéaire et du débruitage préalable de l'image initiale stabilisée, la fonction de similitude utilisant une ou plusieurs des bandes spectrales de l'image intermédiaire.

Selon une autre particularité de l'invention, le débruitage consiste en une fonction de débruitage local appliquée à chaque patch et fonction dudit ensemble de patches similaires au patch considéré.

Selon une autre particularité de l'invention, les bandes spectrales correspondent à l'espace colorimétrique RGB ou YUV.

Selon une autre particularité de l'invention, les bandes spectrales correspondent à l'espace colorimétrique RGB et les pixels de l'image initiale stabilisée sont organisés selon un motif de Bayer.

Selon une autre particularité de l'invention, l'agrégation des estimatifs des bandes spectrales interpolées est réalisée par un calcul d'une moyenne de ces estimatifs de bandes spectrales interpolées.

Selon une autre particularité de l'invention, la décomposition en quatre blocs fonction du phasage dudit patch similaire, est fonction du couple (L,C) correspondant au L$^{ième}$ pixel et au C$^{ième}$ pixel dudit patch similaire, chaque valeur de la matrice à la ligne L et à la colonne C, étant, selon qu'il s'agisse de :

- un pixel L correspondant à une bande spectrale initiale transformée et un pixel C correspondant à une bande spectrale initiale transformée, attribuée à un premier bloc $\Sigma_{dd}$

- un pixel L ne correspondant pas à une bande spectrale initiale et un pixel C correspondant à une bande spectrale initiale transformée, attribuée à un deuxième bloc $\Sigma_{md}$

- un pixel L correspondant à une bande spectrale initiale transformée et un pixel C ne correspondant pas à une bande spectrale initiale, attribuée à un troisième bloc $\Sigma_{dm}$
ou

- un pixel L ne correspondant pas à une bande spectrale initiale et un pixel C ne correspondant pas à une bande spectrale initiale, attribuée à un quatrième bloc $\Sigma_{mm}$.

Selon une autre particularité de l'invention, pour chaque patch similaire dans ledit ensemble de patchs similaires, le calcul des estimatifs des bandes spectrales interpolées est réalisé comme suit :

$$x_m = \bar{y}_m + \Sigma_{md}\Sigma_{dd}^{-1}(y_d - \bar{y}_d)$$

Où:

- $\underline{x_m}$ est le vecteur des estimatifs des bandes spectrales interpolées dudit patch similaire,
- $\overline{y_m}$ est le vecteur des valeurs moyennes des pixels des patches dudit ensemble de patchs similaires, où on considère les pixels ne correspondant pas à une bande spectrale initiale,
- $y_d$ est le vecteur des pixels correspondant à une bande spectrale initiale transformée dans ledit patch similaire,
- $\overline{y_d}$ est le vecteur des valeurs moyennes des pixels des patches dudit ensemble de patchs similaires, où on considère les pixels correspondant à une bande spectrale initiale transformée,

- $\Sigma_{dd}^{-1}$ est la matrice inverse du premier bloc $\Sigma_{dd}$ et
- $\Sigma_{md}$ est le deuxième bloc.

Selon une autre particularité de l'invention, lors du calcul des estimatifs des bandes spectrales interpolées pour des patchs similaires présentant un même phasage, intervient une même décomposition de la matrice de covariance en blocs qui sont mémorisés et réutilisés pour tous ces patchs similaires présentant le même phasage.

La présente divulgation a également pour objet un produit programme d'ordinateur, comprenant des instructions de code pour la mise en oeuvre du procédé selon la description qui précède, lorsqu'il est exécuté par un calculateur.

La présente divulgation a également pour objet un dispositif de traitement d'images comprenant un calculateur, caractérisé en ce qu'il est configuré pour mettre en oeuvre le procédé selon la description qui précède.

Avantageusement, cette méthode permet d'obtenir des résultats améliorés en termes de qualité de restitution et de robustesse au bruit. La méthode selon l'invention permet notamment une diminution voire une suppression d'imprécisions du type irisations.

Avantageusement encore, l'utilisation d'une transformation à régularisation de la variance de l'image permet d'améliorer l'estimation du bruit local lors du débruitage. La transformation à régularisation de la variance de l'image permet également d'améliorer la qualité finale de l'image grâce à une amélioration dans l'estimation du calcul de similitude prenant en compte, de manière conjointe, l'ensemble des bandes spectrales disponibles d'un capteur multi-spectral, comme par exemple un filtre Bayer.

La méthode décrite permet en outre de tenir compte la distribution spatiale dans la variation de précision, qui n'est pas nécessairement isotrope, grâce à la matrice de covariance. La méthode est en effet avantageusement non-locale et s'appuie sur les similarités entre un patch de pixels de l'image et un ensemble de patches similaires, pouvant présenter des positions proches ou éloignées dans l'image initiale.

**Brève description des dessins**

D'autres caractéristiques, détails et avantages apparaîtront à la lecture de la description détaillée ci-après faite en référence aux figures données à titre d'exemple, sur lesquelles :

**Fig. 1**

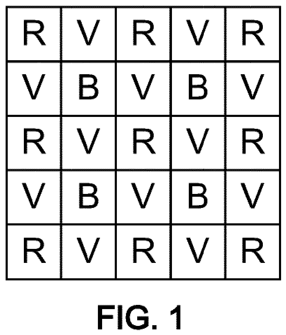

[Fig. 1] représente un exemple de patch d'une image initiale où les pixels sont organisés selon un motif de Bayer.

**Fig. 2a**

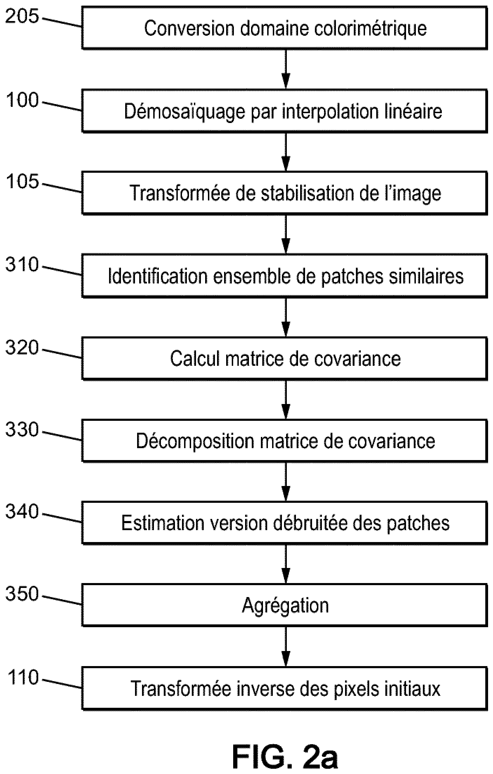

[Fig. 2a] représente schématiquement les principales étapes du procédé de démosaïquage selon un exemple de réalisation de l'invention.

**Fig. 2b**

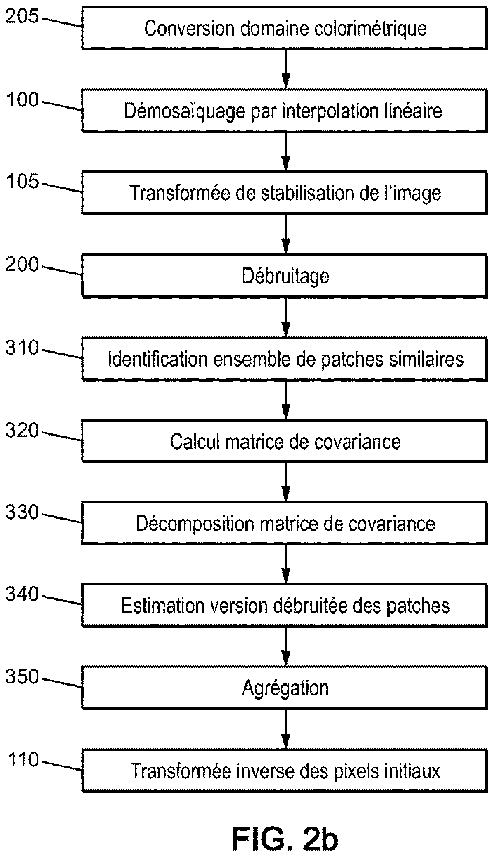

[Fig. 2b] représente schématiquement les principales étapes du procédé de démosaïquage selon un autre exemple de réalisation de l'invention.

**Fig. 3a**

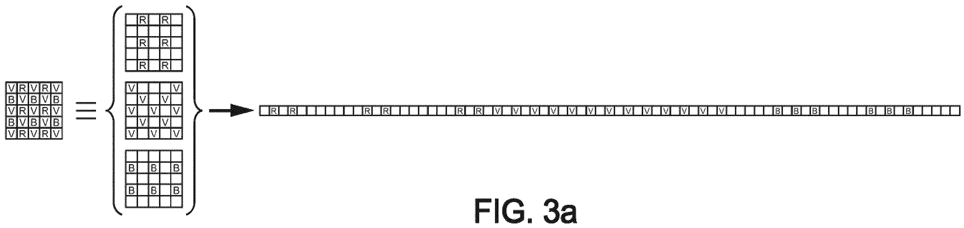

[Fig. 3a] représente un exemple de vecteur obtenu à partir d'un patch d'une image avant démosaïquage.

**Fig. 3b**

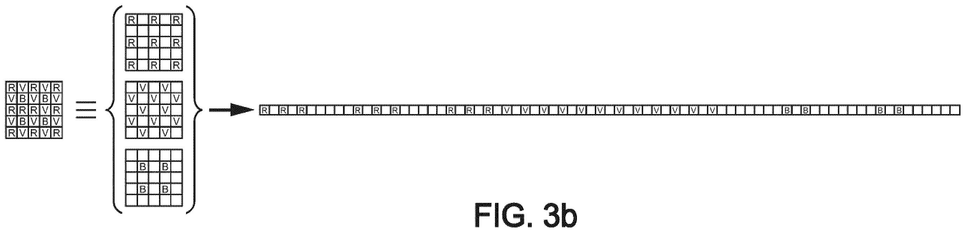

[Fig. 3b] représente un exemple de vecteur obtenu à partir d'un patch d'une image avant démosaïquage, le patch correspondant à un phasage différent de celui représenté en figure 3a.

**Fig. 4**

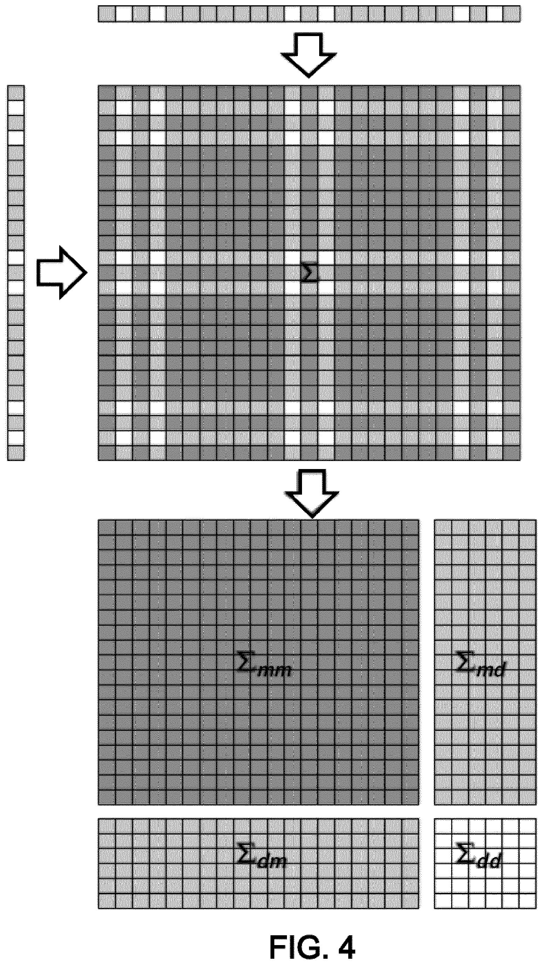

[Fig. 4] représente schématiquement une décomposition par blocs d'une matrice de covariance d'un ensemble de patches similaires à un patch considéré.

**Fig. 5**

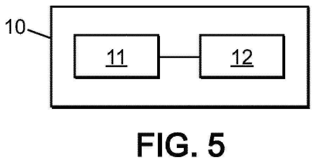

[Fig. 5] représente schématiquement un exemple de dispositif de traitement d'images adapté pour mettre en oeuvre le procédé de démosaïquage.

**Description des modes de réalisation**

En référence aux figures 2a et 2b, on va maintenant décrire des exemples de procédés de démosaïquage d'une image fournie par un capteur dite image initiale. Les images initiales peuvent être composées de pixels appartenant à un espace colorimétrique, par exemple à trois couleurs. Les images initiales peuvent également être des images radar. Les pixels de l'image initiale correspondent chacun à une bande spectrale initiale. Le nombre de bandes spectrales n'est pas limitatif pour la présente invention.

Le procédé de démosaïquage selon l'invention peut être mis en oeuvre par un dispositif de traitement d'image 1 représenté schématiquement en figure 5, comprenant un calculateur 10 pouvant être par exemple un processeur équipé ou non d'une carte graphique, un microprocesseur ou un microcontrôleur. Le dispositif de traitement d'image 1 comprend notamment une interface de communication avec au moins un capteur fournissant des images initiales. Le dispositif de traitement d'image 1 peut également comprendre une mémoire 11 stockant des instructions de code exécutées par le calculateur pour la mise en oeuvre du procédé, ainsi que les données nécessaires à la mise en oeuvre de traitement d'une ou plusieurs images.

L'image initiale est formée d'un ensemble de pixels ayant chacun une bande spectrale initiale correspondant par exemple à une valeur spécifique pour une couleur détectée parmi un ensemble de couleurs du capteur multi-spectral.

Le capteur multi-spectral peut par exemple être du type RGB où des bandes spectrales détectées dans chaque pixel de l'image sont le rouge, le vert ou le bleu, le capteur étant équipé à cet effet d'une matrice de filtres colorés adaptés pour ne laisser passer, pour chaque pixel de la matrice, qu'une partie du spectre lumineux.

Selon un autre mode de réalisation, les bandes spectrales détectées correspondent à l'espace colorimétrique YUV.

D'autres bandes spectrales peuvent également être utilisées pour être utilisées en sortie de capteur ou après une transformation colorimétrique des plans.

Le procédé de démosaïquage peut s'appliquer à plusieurs bandes spectrales, comme par exemple dans l'espace colorimétrique, les valeurs de certains pixels étant disponibles sous la forme de bande spectrale initiale tandis que d'autres manquantes sont à interpoler. Encore une fois, le nombre de bandes spectrales n'est pas limitatif.

Le capteur générant l'image initiale, peut par exemple présenter une configuration de Bayer, comme représenté à la figure 1, dans l'espace colorimétrique RGB. Chaque pixel vert est représenté par la lettre « V », chaque pixel rouge est représenté par la lettre « R » et chaque pixel bleu est représenté par la lettre « B ». Dans cette configuration, les composantes de l'espace colorimétrique sont le rouge, le vert et le bleu. 50% des pixels correspondent à la bande spectrale verte, 25% des pixels correspondent à la bande spectrale rouge et 25% des pixels correspondent à la bande spectrale bleue. Les pixels sont organisés de sorte que dans un carré de deux pixels de côté, les deux pixels d'une diagonale correspondent à la bande spectrale verte tandis que l'autre diagonale comprend un pixel rouge et un pixel bleu.

Comme représenté à la figure 2a, le procédé de démosaïquage comprend par exemple un démosaïquage préalable par interpolation linéaire 100 de l'image initiale, permettant de calculer des bandes spectrales intermédiaires. Dans le cas où les bandes spectrales correspondent à l'espace colorimétrique RGB, il s'agit d'associer à chaque pixel les deux bandes spectrales manquantes parmi le rouge, le vert et le bleu. Les bandes spectrales intermédiaires sont ici un moyen de calcul intermédiaire.

Ce démosaïquage par interpolation linéaire 100 peut être choisi parmi des méthodes de démosaïquage connues de l'Homme de l'Art. Par exemple, dans le cas de l'espace colorimétrique est RGB, le démosaïquage par interpolation linéaire peut être mis en oeuvre au moyen de l'algorithme de Hamilton-Adams, comme décrit dans le brevet US5,652,621.

Le procédé selon l'invention comprend ensuite une étape 105 de transformation de stabilisation de la variance du bruit, appliquée aux pixels des bandes spectrales initiales, comme par exemple une transformée d'Anscombe. L'image transformée, désignée par image stabilisée, aura ainsi une variance régulière et égale pixel à pixel, permettant un calcul plus stable et plus précis de patchs similaires.

Dans le cadre d'un détecteur où le modèle de bruit s'écrit avec un écart type $\sqrt{a^2 + bX}$ où a et b sont des constantes et X est le signal dans le pixel concerné, la transformée d'Anscombe se présente par exemple sous la forme suivante pour un pixel de valeur X :

$$TA(X) = Y = 2\sqrt{\frac{X}{b} + \frac{3}{8} + \frac{a^2}{b^2}}$$

L'image stabilisée permettra également d'effectuer un filtrage de Wiener qui s'appuie sur une estimation locale de la variance du bruit par pixel, pour calculer l'estimation des patches similaires.

Pour le filtrage de Wiener en notant x les pixels de l'image initiale et y ceux de l'image débruitée, pour un patch noté k parmi les patchs similaires S :

$$y_k = \overline{x}_S + (\Sigma_S - \sigma I)\Sigma_S^{-1}(x_k - \overline{x}_S)$$

où $\Sigma_S$ est la matrice de covariance des patchs similaires S, $\overline{x}_S$ la moyenne des patchs similaires S et $\sigma$ la valeur du bruit dans le pixel qui est égale à 1 après transformée d'Anscombe.

Le calcul de la distance entre patches peut être considéré indépendamment par bande ou de préférence de manière multi-bandes, la matrice de covariance étant alors calculée en utilisant tous les phasages disponibles.

Dans un autre mode de réalisation, comme représenté à la figure 2b, le procédé de démosaïquage peut comprendre en outre un traitement de débruitage 200 appliqué en sortie de la transformation 105 de stabilisation de la variance du bruit pour l'obtention de l'image stabilisée. L'estimation du bruit local, lors du débruitage est avantageusement améliorée grâce à l'application préalable de la transformation de régularisation de la variance.

Le modèle de bruit estimé des détecteurs, par bande spectrale, est par exemple utilisé pour gérer l'ensemble des bandes conjointement et assurer l'estimation du bruit local des patchs, en évitant d'introduire de possibles artéfacts dans l'image.

Ce traitement de débruitage 200 peut être choisi parmi les traitements de débruitage connus de l'Homme de l'Art, comme par exemple un algorithme de type NL-Bayes, tel que décrit dans l'article de M. Lebrun et al., « Implementation of the « Non-Local Bayes » (NL-Bayes) Image Denoising Algorithm ». L'algorithme de débruitage NL-Bayes comprend par exemple la répétition deux fois de suite d'une identification d'un ensemble de patches de l'image similaires pour le calcul d'une matrice de covariance de l'ensemble des patches similaires, d'une estimation d'une version débruitée, à partir de la matrice de covariance et d'une agrégation pour obtenir une image débruitée. Le débruitage est par exemple mis en oeuvre deux fois de suite, la première fois sur l'image obtenue à l'issue du démosaïquage par interpolation linéaire et la deuxième fois sur l'image débruitée.

L'algorithme de débruitage réalise par exemple un traitement par patch de l'image.

On peut également envisager un traitement de débruitage ne comprenant pas le calcul d'une matrice de covariance.

Dans toute la suite de la description, un patch est un morceau de l'image de forme carrée et comprenant un sous-ensemble de pixels de l'image. Un patch peut comprendre par exemple entre 2 et 10 pixels de côté et en comprend typiquement entre 3 et 5. Un patch de k = 5 pixels de côté est utilisé à titre d'exemple dans la présente description.

Le procédé de démosaïquage comprend par exemple ensuite un ensemble d'étapes mises en oeuvre sur au moins un patch de l'image et de préférence sur l'ensemble des patches de l'image considérés successivement. Des patches de référence sont par exemple déterminés à l'avance et réalisent des recouvrements entre deux patchs successifs, de façon à couvrir l'ensemble de l'image. Les patches de référence peuvent par exemple être jointifs ou non. Les patches de référence jointifs peuvent par exemple se recouvrir ou pas. Les patches de référence non jointifs entre eux, peuvent par exemple être plus ou moins espacés les uns des autres. Pour les patches de référence non jointifs, une zone de l'image non couverte est par exemple inférieure à 50% de l'image voire inférieure à 25% de l'image, voire inférieure à 5% de l'image. Le choix de la proportion de l'image couverte par les patches de référence et leur éventuel recouvrement sera optimisé en fonction des cas d'usage. La proportion de l'image, couverte par les patches de référence, est par exemple comprise entre 50% et 100 %.

Pour chaque patch considéré, désigné par patch de référence, on réalise une étape 310 d'identification d'un ensemble de patches similaires de l'image au patch de référence. L'étape d'identification 310 d'un ensemble de patches de l'image similaires au patch considéré peut être mise en oeuvre en calculant une distance entre le patch considéré et chacun des patches de l'image appartenant à un voisinage du patch considéré, le voisinage étant défini comme une portion de l'image de taille n x n, où n est un nombre de pixels strictement supérieur au nombre de pixels k d'un côté d'un patch, et inférieur ou égal au nombre de pixels d'un plus petit côté de l'image.

La distance peut être calculée en radiométrie native, c'est-à-dire à partir des bandes spectrales initiales dans l'image initiale.

La distance peut aussi être calculée à partir des bandes spectrales transformées. Afin d'utiliser les corrélations entre les bandes spectrales, il est possible à titre d'exemple de concaténer les patchs des différentes bandes spectrales afin de créer un seul patch inter-bandes de taille k x k x N et d'utiliser la distance euclidienne sur ce patch comme suit :

$$d(P,Q) = \sqrt{\Sigma_N\left(P_{i,N} - Q_{i,N}\right)^2/Nk^2}$$

La distance peut être calculée sur l'ensemble des patches P et Q concernés ou seulement une portion de ceux-ci, par exemple une bande horizontale ou verticale.

La distance peut être calculée en radiométrie native ou dans l'image transformée, c'est-à-dire à partir des bandes spectrales initiales dans l'image initiale ou à partir des bandes spectrales initiales transformées. Dans l'exemple de la matrice de Bayer, cela reviendrait à :

$$d(P,Q) = \sqrt{\left(\left(P_{i,R} - Q_{i,R}\right)^2 + \left(P_{i,G} - Q_{i,G}\right)^2 + \left(P_{i,B} - Q_{i,B}\right)^2\right)/3k^2}$$

où l'indice R, G, B respectivement correspond à la composante dans la couleur rouge, verte ou bleue, du patch P ou Q, respectivement.

En variante, l'image initiale peut être préalablement convertie, avant la transformation de stabilisation de la variance du bruit, lors d'une étape 205 dans un autre espace colorimétrique, et la distance quadratique normalisée peut être calculée dans cet espace. Par exemple, si l'image initiale est dans le domaine RGB, l'image peut être convertie dans le domaine YUV selon une transformation connue de l'Homme de l'Art. Dans ce cas, la distance quadratique normalisée peut être calculée sur la seule composante de luminance Y. L'image initiale sera par exemple convertie avant l'étape 100 de démosaïquage par interpolation linéaire, comme représenté à la figure 2a ou 2b. L'image initiale peut également être convertie avant la transformation de stabilisation de la variance du bruit, mais après l'étape 100 de démosaïquage par interpolation linéaire.

La distance est par exemple comparée à un seuil déterminé, en dessous duquel les patchs sont considérés comme similaires. La distance est calculée, de préférence, à partir d'une image transformée, le seuil étant ainsi directement lié au bruit local, ce qui permet un débruitage plus efficace.

On peut également prévoir un nombre minimum de patchs similaires correspondant aux distances minimales calculées.

On peut également prévoir un nombre minimum de patchs similaires correspondant aux distances minimales calculées auxquels viennent s'ajouter les patchs dont la distance est inférieure au seuil déterminé.

Selon une variante de réalisation, l'identification d'un ensemble de patches similaires au patch considéré peut comprendre l'application d'une analyse en composantes principales de l'image en coordonnées natives, transformées ou converties, et le calcul d'une distance (p.ex. euclidienne) sur les composantes de plus fort poids issus de cette analyse.

Selon un autre mode de réalisation, une détermination des patchs similaires peut être réalisée et mémorisée lors d'une étape préalable de débruitage.

Le procédé de démosaïquage comprend une étape 320 suivante de calcul d'une matrice de covariance de l'ensemble des patches similaires au patch de référence.

La matrice de covariance peut être calculée sur les valeurs des pixels des patches dans les bandes spectrales initiales transformées représentées dans l'image initiale stabilisée.

Selon un autre mode de réalisation, la matrice de covariance peut également être calculée sur les pixels d'une image intermédiaire obtenue par le démosaïquage par interpolation linéaire, comme représenté à la figure 2a et éventuellement complété par un débruitage, comme représenté à la figure 2b.

Une matrice de covariance, calculée lors d'un précédent traitement, peut éventuellement être réutilisée.

Pour le calcul de la matrice de covariance pour un ensemble de patches donné, chaque patch P est représenté par un vecteur (P(1)...P(n)) où n correspond à la multiplication du nombre de pixels contenu dans le patch par le nombre de bandes spectrales. Par exemple pour l'espace colorimétriques à trois couleurs les coordonnées du vecteur de 1 à n/ 3 correspondent aux valeurs des pixels du patch pour la première couleur, les coordonnées de n/3+1 à 2n/ 3 correspondent aux valeurs des pixels du patch pour la deuxième couleur et les coordonnées de 2n/ 3+1 à n correspondent aux valeurs des pixels du patch pour la troisième couleur. Chaque valeur d'une coordonnée d'un patch est par exemple:

- la bande spectrale initiale transformée du pixel disponible dans l'image initiale en sortie du capteur ou,

- La bande spectrale intermédiaire obtenue par le démosaïquage par interpolation linéaire complété éventuellement par un débruitage.

Par exemple, pour des patches en colorimétrie RGB de taille 5 pixels par 5 pixels, les patches comprennent 3 x 5 x 5 = 75 bandes spectrales, dont 25 sont disponibles dans l'image initiale et 50 sont manquantes.

Chaque patch de k pixels de côté dans l'image initiale est représenté comme un vecteur dont les $k^2$ premiers termes correspondent à une bande spectrale, par exemple la couleur rouge, les $k^2$ termes suivants correspondent à une autre bande spectrale, par exemple la couleur verte, et les $k^2$ derniers termes correspondent à une troisième bande spectrale, par exemple la couleur bleue.

La matrice de covariance est donc une matrice où chaque terme est défini comme suit :

$$u_{ij} = \frac{1}{N} \sum_{k=1}^{N} (P_k(i) - \mu_i)(P_k(j) - \mu_j)$$

où :

- i et j sont les indices des coordonnées dans la matrice,
- Pk(i) est la valeur de la i-ème coordonnée du k-ème patch,
- $\mu_i$ est la moyenne des Pk(i) pour tous les k variant de 1 à N,
- $\mu_j$ est la moyenne des Pk(j) pour tous les k variant de 1 à N.
- N est le nombre de patches similaires dans l'ensemble des patches similaires au patch de référence.

La matrice de covariance quantifie donc la covariance des valeurs des pixels des patches similaires.

Dans la suite du procédé, on exploite le caractère disponible d'un pixel, c'est-à-dire ayant une bande spectrale initiale transformée, ou le caractère manquant d'un pixel, c'est-à-dire n'ayant pas une bande spectrale initiale, pour une image à plusieurs bandes spectrales. Les emplacements des pixels présentant un caractère disponible ou manquant dépendent du phasage du patch. Pour déterminer le phasage d'un patch, il faut considérer l'emplacement sur le capteur matriciel d'un patch correspondant dans l'image initiale. Dans le cas par exemple d'un motif de Bayer, il existe quatre phasages possibles dont deux exemples sont représentés sur les figures 3a et 3b. Dans ces figures également, les pixels présentant une valeur initiale selon la composante respective rouge, verte ou bleue sont représentés respectivement par la lettre R, V, B. La figure 3a correspond à un phasage où le pixel situé en haut à gauche du patch est exprimé dans la composante verte de l'image d'origine, et la figure 3b correspond à un phasage où le pixel situé en haut à gauche du patch est le pixel exprimé dans la composante rouge.

Le procédé de démosaïquage comprend ensuite à l'étape 330, pour chaque patch similaire dudit ensemble de patchs similaires, un calcul d'estimatifs des bandes spectrales interpolées, fonction d'une décomposition en bloc de la matrice de covariance, où la décomposition en quatre blocs est fonction du phasage de chaque patch similaire.

En référence à la figure 4, on a représenté schématiquement un exemple de décomposition par bloc d'une matrice de covariance en fonction du caractère disponible ou non des bandes spectrales des pixels dans l'image initiale. Cette décomposition par bloc aboutit par exemple à quatre blocs, en fonction du phasage du patch similaire selon un couple (L,C) correspondant au Lième pixel et au Cième pixel du patch similaire pour attribuer chaque valeur de la matrice en ligne L et en colonne C:

- au bloc Σmm si le pixel L ne correspond pas à une bande spectrale initiale transformée et le pixel C ne correspond pas à une bande spectrale initiale,

- au bloc Σmd si le pixel L ne correspond pas à une bande spectrale initiale et le pixel C correspond à une bande spectrale initiale transformée

- au bloc Σdm si le pixel L correspond à une bande spectrale initiale transformée et le pixel C ne correspond pas à une bande spectrale initiale, ou

- au bloc Σdd si le pixel L correspond à une bande spectrale initiale transformée et le pixel C correspond à une bande spectrale initiale.

Dans le cas d'un motif de Bayer pour lequel il existe quatre phasages possibles des patches, toutes les différentes décompositions par blocs de la matrice de covariance peuvent être calculée et mémorisées pour des calculs ultérieurs.

Par la suite, pour chaque décomposition par bloc obtenue, les valeurs manquantes de chaque patch d'un sous-ensemble de patches de l'ensemble E dont le phasage correspond à la décomposition par bloc, sont estimées lors d'une étape 340 avec un estimateur bayésien de type MAP (maximum a posteriori) :

$$\tilde{x}_m = arg\max_{x_m} P(x_m | y_d)$$

où :

- $\tilde{x}_m$ est l'estimateur au maximum a posteriori de $x_m$,
- $x_m$ est le vecteur des estimatifs des bandes spectrales interpolées dudit patch similaire
- $y_d$ est le vecteur des pixels correspondant à une bande spectrale initiale transformée dans ledit patch similaire.

Les estimatifs des bandes spectrales interpolées sont obtenus par le calcul suivant :

$$x_m = \bar{y}_m + \Sigma_{md}\Sigma_{dd}^{-1}(y_d - \bar{y}_d)$$

où :

- $x_m$ est le vecteur des estimatifs des bandes spectrales interpolées dudit patch similaire,
- $\bar{y}_m$ est le vecteur des valeurs moyennes des pixels transformés des patches dudit ensemble de patchs similaires, où on considère les pixels ne correspondant pas à une bande spectrale initiale,
- $y_d$ est le vecteur des pixels correspondant à une bande spectrale initiale transformée dans ledit patch similaire,
- $\bar{y}_d$ est le vecteur des valeurs moyennes des pixels des patches dudit ensemble de patchs similaires, où on considère les pixels correspondant à une bande spectrale initiale transformée,
- $\Sigma_{dd}^{-1}$ est la matrice inverse du bloc $\Sigma_{dd}$ défini précédemment et
- $\Sigma_{md}$ est le bloc défini précédemment.

Dans le cas où l'inversion de la matrice correspondant au bloc $\Sigma_{dd}$ n'est pas possible, le patch sera réglé à la valeur moyenne $\bar{y}_m$ des patchs similaires.

Le procédé de démosaïquage comprend ensuite une étape d'agrégation 350 dans laquelle des estimatifs des bandes spectrales interpolées pour des pixels de patches appartenant à différents ensembles de patchs similaires en relation avec différents patches de référence. On entend par agrégation la combinaison de différentes mesures en une variable unique, soit par simple addition des valeurs obtenues, soit par addition des valeurs pondérées. L'agrégation est mise en oeuvre par exemple en calculant, une moyenne des estimations réalisée pour un pixel et une composante.

L'ensemble des bandes spectrales interpolées est ainsi obtenu.

On exécute ensuite une étape 110 de transformée inverse des pixels des bandes spectrales initiales transformées pour rétablir les pixels des bandes spectrales générés dans l'image initiale.

En reprenant les notations précédentes, la transformée inverse se présente par exemple sous la forme :

$$TA^{-1}(Y) = X = b \times \left(\frac{Y^2}{4} - \frac{3}{8} - \frac{a^2}{b^2}\right)$$

L'image démosaïquée selon l'invention, présente une qualité améliorée et une réduction significative voire une absence d'irisations, notamment pour des applications nécessitant une observation à haute altitude telle que l'observation de la terre.

Annexe : démonstration de la formule d'estimation.

L'estimateur au maximum a posteriori de $x_m$ en connaissant les données disponibles bruitées $y_d$ est donné par :

$$\tilde{x}_m = arg\max_{x_m} P(x_m | y_d)$$

En utilisant la formule de Bayes on obtient les résultats suivants :

$$\tilde{x}_m = \arg\max_{x_m} P(x_m \cap y_d)$$

$$= \arg\max_{x_m} e^{-\frac{1}{2}[x_m - \bar{x}_m \quad y_d - \bar{y}_d]\begin{bmatrix}\Sigma_{mm} & \Sigma_{md} \\ \Sigma_{dm} & \Sigma_{dd}\end{bmatrix}^{-1}\begin{bmatrix}x_m - \bar{x}_m \\ y_d - \bar{y}_d\end{bmatrix}}$$

$$\begin{bmatrix}\Sigma_{mm} & \Sigma_{md} \\ \Sigma_{dm} & \Sigma_{dd}\end{bmatrix}$$ est la matrice de covariance des données manquantes (non bruitées) et des données disponibles (bruitées).

On note :

$$\begin{bmatrix}\Sigma_{mm} & \Sigma_{md} \\ \Sigma_{dm} & \Sigma_{dd}\end{bmatrix} = \begin{bmatrix}A & B \\ C & D\end{bmatrix}$$

Avec A, B, C, D des matrices correspondant respectivement aux matrices

$$\Sigma_{mm}, \Sigma_{md}, \Sigma_{dm} \text{ et } \Sigma_{dd}.$$

$$\tilde{x}_m = \arg\max_{x_m} e^{-\frac{1}{2}[x_m - \bar{x}_m \quad y_d - \bar{y}_d]\begin{bmatrix}A & B \\ C & D\end{bmatrix}^{-1}\begin{bmatrix}x_m - \bar{x}_m \\ y_d - \bar{y}_d\end{bmatrix}}$$

$$= \arg\min_{x_m} [x_m - \bar{x}_m \quad y_d - \bar{y}_d]\begin{bmatrix}A & B \\ C & D\end{bmatrix}^{-1}\begin{bmatrix}x_m - \bar{x}_m \\ y_d - \bar{y}_d\end{bmatrix}$$

$$= \arg\min_{x_m} (x_m - \bar{x}_m)^T A(x_m - \bar{x}_m) + (x_m - \bar{x}_m)^T B(y_d - \bar{y}_d) + (y_d - \bar{y}_d)^T C(x_m - \bar{x}_m)$$

$$+ (y_d - \bar{y}_d)^T D(y_d - \bar{y}_d)$$

Le dernier terme de dépend pas de $x_m$ et peut donc être supprimé. En dérivant par rapport à $x_m$ on obtient donc :

$$2(x_m - \bar{x}_m)^T A + (y_d - \bar{y}_d)^T B^T + (y_d - \bar{y}_d)^T C = 0$$

$$2(x_m - \bar{x}_m)^T A + (y_d - \bar{y}_d)^T (B^T + C) = 0$$

$$2(x_m - \bar{x}_m)^T A + (y_d - \bar{y}_d)^T (B^T + C)A^{-1} = 0$$

Comme la matrice de covariances est symétrique, alors sont inverse est également symétrique. On a donc que $B^T = C$. A l'aide de formules d'inversion par bloc (complément de Schur) on peut montrer que $CA^{-1} = -\Sigma_{dd}^{-1}\Sigma_{dm}$. On obtient :

$$(x_m - \bar{x}_m)^T - (y_d - \bar{y}_d)^T \Sigma_{dd}^{-1}\Sigma_{dm} = 0$$

$$x_m - \bar{x}_m = (\Sigma_{dd}^{-1}\Sigma_{dm})^T (y_d - \bar{y}_d)$$

$$x_m - \bar{x}_m = \Sigma_{md}\Sigma_{dd}^{-1}(y_d - \bar{y}_d)$$

$$x_m = \bar{x}_m + \Sigma_{md}\Sigma_{dd}^{-1}(y_d - \bar{y}_d)$$

On suppose que les patches similaires ont été choisis tels que $\bar{y}_m \approx \tilde{x}_m$.

$$x_m = \bar{y}_m + \Sigma_{md}\Sigma_{dd}^{-1}(y_d - \bar{y}_d)$$

Si on utilise des données débruitées pour calculer la matrice de covariance des données disponibles, on peut utiliser l'approximation :

$$\Sigma_{dd} \approx \Sigma_{dd}^{debruite} + \sigma^2 I$$

Où $\Sigma_{dd}^{debruite}$ est le bloc de la matrice de covariance calculée sur les données débruitées disponibles, I est la matrice identité, et $\sigma^2$ est la variance du bruit. On peut montrer que $\Sigma_{md}$ est inchangé dans ce cas. On obtient :

$$x_m = \bar{y}_m + \Sigma_{md}(\Sigma_{dd}^{debruite} + \sigma^2 I)^{-1}(y_d - \bar{y}_d)$$

## Revendications

1. Procédé de démosaïquage appliqué à une image initiale présentant des pixels correspondants chacun à une bande spectrale initiale pour l'obtention d'une image démosaïquée à plusieurs bandes spectrales présentant des pixels correspondants chacun à ladite bande spectrale initiale ou à une bande spectrale interpolée, **caractérisé en ce qu'**il comprend :

   - une transformation de stabilisation de la variance du bruit, appliquée aux pixels des bandes spectrales initiales,
   - sur la base d'une pluralité de patchs de référence prédéterminés et pour chaque patch de référence parmi la pluralité de patchs de référence :

      ∘ une détermination (310) d'un ensemble de patchs similaires audit patch de référence, en exploitant les pixels d'au moins une des bandes spectrales initiales transformées
      ∘ une détermination (320) d'une matrice de covariance dudit ensemble de patchs similaires et
      ∘ pour chaque patch similaire dudit ensemble de patchs similaires, un calcul d'estimatifs des bandes spectrales interpolées, fonction d'une décomposition en bloc de la matrice de covariance (340), où la décomposition en quatre blocs est fonction du phasage de chaque patch similaire,

   - une détermination des bandes spectrales interpolées par une agrégation (350) des estimatifs des bandes spectrales interpolées, où on agrège les estimatifs des bandes spectrales interpolées pour chaque pixel et
   - une transformation inverse de la transformation de stabilisation, appliquée aux pixels des bandes spectrales initiales transformées.

2. Procédé de démosaïquage selon la revendication 1, dans lequel la transformation de stabilisation de la variance du bruit est réalisée en fonction d'un modèle de bruit propre au détecteur.

3. Procédé selon la revendication 1 ou 2, dans lequel les patches de référence prédéterminés sont répartis de façon à couvrir une proportion déterminée de l'image.

4. Procédé selon l'une des revendications 1 à 3, dans lequel lors de la détermination de la matrice de covariance de l'ensemble des patchs similaires, les patchs similaires comprennent des bandes spectrales initiales transformées et des bandes spectrales intermédiaires, ces bandes spectrales intermédiaires étant issues d'un démosaïquage préalable par interpolation linéaire appliqué à l'image initiale stabilisée.

5. Procédé selon la revendication précédente, dans lequel la détermination (310) dudit ensemble de patchs similaires à chaque patch de référence est déterminée par une fonction de similitude appliquée à une image intermédiaire résultant du démosaïquage préalable par interpolation linéaire de l'image initiale stabilisée, la fonction de similitude utilisant une ou plusieurs des bandes spectrales de l'image intermédiaire.

6. Procédé selon l'une des revendications 1 à 3, dans lequel lors de la détermination de la matrice de covariance de l'ensemble des patchs similaires, les patchs similaires comprennent des bandes spectrales initiales transformées et des bandes spectrales intermédiaires, ces bandes spectrales intermédiaires étant issues d'un démosaïquage préalable par interpolation linéaire et d'un débruitage préalable appliqués à l'image initiale stabilisée.

7. Procédé selon la revendication précédente, dans lequel la détermination (310) dudit ensemble de patchs similaires à chaque patch de référence est déterminée par une fonction de similitude appliquée à une image intermédiaire résultant du démosaïquage préalable par interpolation linéaire (100) et du débruitage préalable de l'image initiale stabilisée, la fonction de similitude utilisant une ou plusieurs des bandes spectrales de l'image intermédiaire.

8. Procédé selon la revendication 6 ou 7, dans lequel le débruitage consiste en une fonction de débruitage local appliquée à chaque patch et fonction dudit ensemble de patches similaires au patch considéré.

9. Procédé selon l'une des revendications 1 à 8, dans lequel les bandes spectrales correspondent à l'espace colorimétrique RGB ou YUV.

10. Procédé selon l'une des revendications 1 à 9, dans lequel les bandes spectrales correspondent à l'espace colorimétrique RGB et les pixels de l'image initiale stabilisée sont organisés selon un motif de Bayer.

11. Procédé selon l'une des revendications précédentes, dans lequel l'agrégation (350) des estimatifs des bandes spectrales interpolées est réalisée par un calcul d'une moyenne de ces estimatifs de bandes spectrales interpolées.

12. Procédé selon l'une des revendications précédentes, dans lequel la décomposition en quatre blocs fonction du phasage dudit patch similaire, est fonction du couple (L,C) correspondant au $L^{\text{ième}}$ pixel et au $C^{\text{ième}}$ pixel dudit patch similaire, chaque valeur de la matrice à la ligne L et à la colonne C, étant, selon qu'il s'agisse de :

   - un pixel L correspondant à une bande spectrale initiale transformée et un pixel C correspondant à une bande spectrale initiale transformée, attribuée à un premier bloc $\Sigma_{dd}$
   - un pixel L ne correspondant pas à une bande spectrale initiale et un pixel C correspondant à une bande spectrale initiale transformée, attribuée à un deuxième bloc $\Sigma_{md}$
   - un pixel L correspondant à une bande spectrale initiale transformée et un pixel C ne correspondant pas à une bande spectrale initiale, attribuée à un troisième bloc $\Sigma_{dm}$
   ou
   - un pixel L ne correspondant pas à une bande spectrale initiale et un pixel C ne correspondant pas à une bande spectrale initiale, attribuée à un quatrième bloc $\Sigma_{mm}$.

13. Procédé selon la revendication précédente, dans lequel, pour chaque patch similaire dans ledit ensemble de patchs similaires, le calcul des estimatifs des bandes spectrales interpolées est réalisé comme suit :

$$x_m = \bar{y}_m + \Sigma_{md}\Sigma_{dd}^{-1}(y_d - \bar{y}_d)$$

où :

   - $x_m$ est le vecteur des estimatifs des bandes spectrales interpolées dudit patch similaire,
   - $\bar{y}_m$ est le vecteur des valeurs moyennes des pixels des patches dudit ensemble de patchs similaires, où on considère les pixels ne correspondant pas à une bande spectrale initiale,
   - $y_d$ est le vecteur des pixels correspondant à une bande spectrale initiale transformée dans ledit patch similaire,
   - $\bar{y}_d$ est le vecteur des valeurs moyennes des pixels des patches dudit ensemble de patchs similaires, où on considère les pixels correspondant à une bande spectrale initiale transformée,

- $\Sigma_{dd}^{-1}$ est la matrice inverse du premier bloc $\Sigma_{dd}$ et

- $\Sigma_{md}$ est le deuxième bloc.

14. Procédé selon la revendication précédente, dans lequel lors du calcul des estimatifs des bandes spectrales interpolées pour des patchs similaires présentant un même phasage, intervient une même décomposition de la matrice de covariance en blocs qui sont mémorisés et réutilisés pour tous ces patchs similaires présentant le même phasage.

15. Produit programme d'ordinateur, comprenant des instructions de code pour la mise en oeuvre du procédé selon l'une des revendications précédentes, lorsqu'il est exécuté par un calculateur.

16. Dispositif de traitement d'images comprenant un calculateur (11), **caractérisé en ce qu'**il est configuré pour mettre en oeuvre le procédé selon l'une des revendications 1 à 14.

**Patentansprüche**

1. Verfahren zur Durchführung einer Demosaikierung , das auf ein Anfangsbild, dessen Pixel jeweils einem Anfangsspektralband entsprechen, angewendet wird, um ein in mehrere Spektralbänder demosaikiertes Bild zu gewinnen, dessen Pixel jeweils dem Anfangsspektralband oder einem interpolierten Spektralband entsprechen, **dadurch gekennzeichnet, dass** es aufweist:

   - eine Stabilisationstransformation der Varianz des Rauschens, die auf Pixel der Anfangsspektralbänder angewendet wird,
   - auf der Basis von mehreren vorgegebenen Referenzbereichen und für jeden Referenzbereich der mehreren Referenzbereiche:

      * eine Bestimmung (310) einer Gesamtheit von Bereichen, die dem Referenzbereich ähnlich sind, durch Auswerten der Pixel mindestens eines der transformierten Anfangsspektralbänder
      * eine Bestimmung (320) einer Kovarianzmatrix der Gesamtheit ähnlicher Bereiche und
      * für jeden ähnlichen Bereich der Gesamtheit ähnlicher Bereiche, eine Berechnung von Schätzungen der interpolierten Spektralbänder abhängig von einer blockweisen Zerlegung der Kovarianzmatrix (340), wobei die Zerlegung in vier Blöcke abhängig von der Phase jedes ähnlichen Bereichs ist,

      - eine Bestimmung von interpolierten Spektralbändern durch eine Aufsummierung (350) der Schätzungen der interpolierten Spektralbänder, wobei man die Schätzungen der interpolierten Spektralbänder für jedes Pixel aufsummiert, und
      - eine zur Stabilisationstransformation inverse Transformation, die auf die Pixel der transformierten Anfangsspektralbänder angewendet wird.

2. Verfahren zur Durchführung einer Demosaikierung nach Anspruch 1, in welchem die Stabilisationstransformation der Varianz des Rauschens in Abhängigkeit von einem Rauschmodell erfolgt, das dem Detektor eigen ist.

3. Verfahren nach Anspruch 1 oder 2, in welchem die vorgegebenen Referenzbereiche derart verteilt sind, um einen bestimmten Anteil des Bilds abzudecken.

4. Verfahren nach einem der Ansprüche 1 bis 3, in welchem bei der Bestimmung der Kovarianzmatrix der Gesamtheit ähnlicher Bereiche die ähnlichen Bereiche transformierte Anfangsspektralbänder und Zwischenspektralbänder aufweisen, wobei diese Zwischenspektralbänder aus einer vorausgehenden Durchführung einer Demosaikierung durch lineare Interpolation stammen, die auf das stabilisierte Anfangsbild angewandt worden ist.

5. Verfahren nach dem vorstehenden Anspruch, in welchem die Bestimmung (310) der Gesamtheit von Bereichen, die dem jeweiligen Referenzbereich ähnlich sind, mithilfe einer Ähnlichkeitsfunktion bestimmt wird, die auf ein Zwischenbild angewendet wird, das aus der vorausgehenden Durchführung einer Demosaikierung durch lineare Interpolation des stabilisierten Anfangsbilds resultiert, wobei die Ähnlichkeitsfunktion ein oder mehrere der Spektralbänder des Zwischenbilds verwendet.

**6.** Verfahren nach einem der Ansprüche 1 bis 3, in welchem bei der Bestimmung der Kovarianzmatrix der Gesamtheit ähnlicher Bereiche die ähnlichen Bereiche transformierte Anfangsspektralbänder und Zwischenspektralbänder aufweisen, wobei diese Zwischenspektralbänder aus einer vorausgehenden Durchführung einer Demosaikierung durch lineare Interpolation und aus einer auf das stabilisierte Anfangsbild angewandten vorausgehenden Entrauschung stammen.

**7.** Verfahren nach dem vorstehenden Anspruch, in welchem die Bestimmung (310) der Gesamtheit von Bereichen, die dem jeweiligen Referenzbereich ähnlich sind, mithilfe einer Ähnlichkeitsfunktion bestimmt wird, die auf ein Zwischenbild angewendet wird, das aus der vorausgehenden Durchführung einer Demosaikierung durch lineare Interpolation (100) und aus der vorausgehenden Entrauschung des stabilisierten Anfangsbilds resultiert, wobei die Ähnlichkeitsfunktion ein oder mehrere der Spektralbänder des Zwischenbilds verwendet.

**8.** Verfahren nach Anspruch 6 oder 7, wobei die Entrauschung aus einer lokalen Entrauschungsfunktion besteht, die auf jeden Bereich angewendet wird und abhängig von der Gesamtheit der Bereiche ist, die dem betrachteten Bereich ähnlich sind.

**9.** Verfahren nach einem der Ansprüche 1 bis 8, in welchem die Spektralbänder dem Farbraum RGB oder YUV entsprechen.

**10.** Verfahren nach einem der Ansprüche 1 bis 9, in welchem die Spektralbänder dem Farbraum RGB entsprechen und die Pixel des stabilisierten Anfangsbilds gemäß einem Bayer-Motiv organisiert sind.

**11.** Verfahren nach einem der vorstehenden Ansprüche, in welchem die Aufsummierung (350) der Schätzungen der interpolierten Spektralbänder durch eine Berechnung eines Mittelwerts dieser Schätzungen der interpolierten Spektralbänder erfolgt.

**12.** Verfahren nach einem der vorstehenden Ansprüche, in welchem die Zerlegung in vier Blöcke in Abhängigkeit von der Phase des ähnlichen Bereichs abhängig von dem Paar (L, C) ist, das dem L-ten Pixel und dem C-ten Pixel des ähnlichen Bereichs entspricht, wobei jeder Wert der Matrix an der Zeile L und der Spalte C

- einem ersten Block $\Sigma_{dd}$ zugeordnet wird, wenn es sich um ein Pixel L, das einem transformierten Anfangsspektralband entspricht, und ein Pixel C, das einem transformierten Anfangsspektralband entspricht, handelt,
- einem zweiten Block $\Sigma_{md}$ zugeordnet wird, wenn es sich um ein Pixel L, das nicht einem Anfangsspektralband entspricht, und ein Pixel C, das einem transformierten Anfangsspektralband entspricht, handelt,
- einem dritten Block $\Sigma_{dm}$ zugeordnet wird, wenn es sich um ein Pixel L, das einem transformierten Anfangsspektralband entspricht, und ein Pixel C, das nicht einem Anfangsspektralband entspricht, handelt, oder
- einem vierten Block $\Sigma_{mm}$ zugeordnet wird, wenn es sich um ein Pixel L, das nicht einem Anfangsspektralband entspricht, und ein Pixel C, das nicht einem Anfangsspektralband entspricht, handelt.

**13.** Verfahren nach dem vorstehenden Anspruch, in welchem für jeden ähnlichen Bereich in der Gesamtheit ähnlicher Bereiche die Berechnung der Schätzungen der interpolierten Spektralbänder wie folgt durchgeführt wird:

$$x_m = \bar{y}_m + \ \Sigma_{md} \ \Sigma_{dd}^{-1} \ (y_d - \bar{y}_d)$$

wobei

- $x_m$ der Vektor der Schätzungen der interpolierten Spektralbänder des ähnlichen Bereichs ist,
- $\bar{y}_m$ der Vektor der Mittelwerte der Pixel der Bereiche der Gesamtheit ähnlicher Bereiche ist, wobei man die Pixel betrachtet, die einem Anfangsspektralband nicht entsprechen,
- $y_d$ der Vektor der Pixel ist, die einem transformierten Anfangsspektralband in dem ähnlichen Bereich entsprechen,
- $\bar{y}_d$ der Vektor der Mittelwerte der Pixel der Bereiche der Gesamtheit ähnlicher Bereiche ist, wobei man die Pixel betrachtet, die einem transformierten Anfangsspektralband entsprechen,
- $\Sigma_{dd}^{-1}$ die inverse Matrix des ersten Blocks $\Sigma_{dd}$ ist, und
- $\Sigma_{md}$ der zweite Block ist.

14. Verfahren nach dem vorstehenden Anspruch, in welchem bei der Berechnung der Schätzungen der interpolierten Spektralbänder für die ähnlichen Bereiche, die eine gleiche Phase haben, eine gleiche Zerlegung der Kovarianzmatrix in Blöcke stattfindet, die gespeichert werden und für alle diese ähnlichen Bereiche, die die gleiche Phase haben, wieder verwendet wird.

15. Computerprogrammprodukt, aufweisend Code-Befehle zum Durchführen des Verfahrens nach einem der vorstehenden Ansprüche, wenn es von einem Rechner ausgeführt wird.

16. Bildverarbeitungsvorrichtung, aufweisend einen Rechner (11), **dadurch gekennzeichnet, dass** sie zum Durchführen des Verfahrens nach einem der Ansprüche 1 bis 14 konfiguriert ist.

**Claims**

1. A method for demosaicing applied to an initial image having pixels each corresponding to an initial spectral band to obtain a demosaiced image with several spectral bands having pixels each corresponding to said initial spectral band or to an interpolated spectral band,
   **characterised in that** it comprises:

   - a noise variance stabilisation transformation, applied to the pixels of the initial spectral bands,
   - based on a plurality of predetermined reference patches and for each reference patch among the plurality of reference patches:

     ◦ a determination (310) of a set of patches similar to said reference patch, by exploiting the pixels of at least one of the transformed initial spectral bands
     ◦ a determination (320) of a covariance matrix of said set of similar patches and
     ◦ for each similar patch of said set of similar patches, a calculation of estimates of the interpolated spectral bands, a function of a block decomposition of the covariance matrix (340), where the decomposition into four blocks is a function of the phasing of each similar patch,

   - a determination of the interpolated spectral bands by an aggregation (350) of the estimates of the interpolated spectral bands, where the estimates of the interpolated spectral bands are aggregated for each pixel and
   - an inverse transformation of the stabilisation transformation, applied to the pixels of the transformed initial spectral bands.

2. The demosaicing method according to claim 1, wherein the noise variance stabilisation transformation is carried out depending on a noise model specific to the detector.

3. The method according to claim 1 or 2, wherein the predetermined reference patches are distributed so as to cover a determined proportion of the image.

4. The method according to one of claims 1 to 3, wherein when determining the covariance matrix of the set of similar patches, the similar patches comprise transformed initial spectral bands and intermediate spectral bands, these intermediate spectral bands originating from a prior demosaicing by linear interpolation applied to the stabilised initial image.

5. The method according to the preceding claim, wherein the determination (310) of said set of patches similar to each reference patch is determined by a similarity function applied to an intermediate image resulting from the prior demosaicing by linear interpolation of the stabilised initial image, the similarity function using one or more of the spectral bands of the intermediate image.

6. The method according to one of claims 1 to 3, wherein when determining the covariance matrix of the set of similar patches, the similar patches comprise transformed initial spectral bands and intermediate spectral bands, these intermediate spectral bands originating from a prior demosaicing by linear interpolation and a prior denoising applied to the stabilised initial image.

7. The method according to the preceding claim, wherein the determination (310) of said set of patches similar to each reference patch is determined by a similarity function applied to an intermediate image resulting from the prior demosaicing by linear interpolation (100) and the prior denoising of the stabilised initial image, the similarity function using one or more of the spectral bands of the intermediate image.

8. The method according to claim 6 or 7, wherein the denoising consists of a local denoising function applied to each patch and a function of said set of patches similar to the considered patch.

9. The method according to one of claims 1 to 8, wherein the spectral bands correspond to the RGB or YUV colour space.

10. The method according to one of claims 1 to 9, wherein the spectral bands correspond to the RGB colour space and the pixels of the stabilised initial image are organised according to a Bayer pattern.

11. The method according to one of the preceding claims, wherein the aggregation (350) of the estimates of the interpolated spectral bands is carried out by calculating an average of these estimates of interpolated spectral bands.

12. The method according to one of the preceding claims, wherein the decomposition into four blocks depending on the phasing of said similar patch depends on the pair (L,C) corresponding to the $L^{th}$ pixel and the $C^{th}$ pixel of said similar patch, each value of the matrix in row L and column C being, depending on whether it is:

- a pixel L corresponding to a transformed initial spectral band and a pixel C corresponding to a transformed initial spectral band, assigned to a first block $\Sigma_{dd}$
- a pixel L not corresponding to an initial spectral band and a pixel C corresponding to a transformed initial spectral band, assigned to a second block $\Sigma_{md}$
- a pixel L corresponding to a transformed initial spectral band and a pixel C not corresponding to an initial spectral band, assigned to a third block $\Sigma_{dm}$
or
- a pixel L not corresponding to an initial spectral band and a pixel C not corresponding to an initial spectral band, assigned to a fourth block $\Sigma_{mm}$.

13. The method according to the preceding claim, wherein, for each similar patch in said set of similar patches, the calculation of the estimates of the interpolated spectral bands is carried out as follows:

$$x_m = \bar{y}_m + \Sigma_{md}\Sigma_{dd}^{-1}(y_d - \bar{y}_d)$$

where:

- $x_m$ is the vector of the estimates of the interpolated spectral bands of said similar patch,
- $\bar{y}_m$ is the vector of the mean values of the pixels of the patches of said set of similar patches, where the pixels not corresponding to an initial spectral band are considered,
- $y_d$ is the vector of the pixels corresponding to a transformed initial spectral band in said similar patch,
- $\bar{y}_d$ is the vector of the mean values of the pixels of the patches of said set of similar patches, where the pixels corresponding to a transformed initial spectral band are considered,
- $\Sigma_{dd}^{-1}$ is the inverse matrix of the first block $\Sigma_{dd}$ and
- $\Sigma_{md}$ is the second block.

14. The method according to the preceding claim, wherein during the calculation of the estimates of the interpolated spectral bands for similar patches having the same phasing, the same decomposition of the covariance matrix into blocks occurs which are stored and reused for all these similar patches having the same phasing.

15. A computer program product, comprising code instructions for implementing the method according to one of the preceding claims, when it is executed by a computer.

16. An image processing device comprising a computer (11), **characterised in that** it is configured to implement the method according to one of claims 1 to 14.

**FIG. 1**

| | |
|---|---|
| 205 | Conversion domaine colorimétrique |
| 100 | Démosaïquage par interpolation linéaire |
| 105 | Transformée de stabilisation de l'image |
| 310 | Identification ensemble de patches similaires |
| 320 | Calcul matrice de covariance |
| 330 | Décomposition matrice de covariance |
| 340 | Estimation version débruitée des patches |
| 350 | Agrégation |
| 110 | Transformée inverse des pixels initiaux |

## FIG. 2a

205 — | Conversion domaine colorimétrique |

100 — | Démosaïquage par interpolation linéaire |

105 — | Transformée de stabilisation de l'image |

200 — | Débruitage |

310 — | Identification ensemble de patches similaires |

320 — | Calcul matrice de covariance |

330 — | Décomposition matrice de covariance |

340 — | Estimation version débruitée des patches |

350 — | Agrégation |

110 — | Transformée inverse des pixels initiaux |

## FIG. 2b

FIG. 3a

FIG. 3b

FIG. 4

FIG. 5

## RÉFÉRENCES CITÉES DANS LA DESCRIPTION

**Documents brevets cités dans la description**

- US 5629734 A

- US 5652621 A

**Littérature non-brevet citée dans la description**

- **J. HAMILTON JR ; J. ADAMS JR.** *Adaptive color plan interpolation in single sensor color-electronic caméra,* 1997
- **A. BUADES et al.** Self-similarity Driven Demosaicking. *Image Processing on Line,* 01 Juin 2011, ISSN 2105-1232
- **HIRAKAWA ; PARKS.** Joint demosaicing and denoising. *IEEE TRANSACTIONS ON IMAGE PROCESSING, A,* 2006, 2146-2157

- **BUADES ; DURAN.** CFA Vidéo Denoising and Demosaicking Chain via Spatio-Temporal Patch-Based Filtering. *IEEE TRANSACTIONS ON CIRCUITS AND SYSTEMS FOR VIDEO TECHNOLOGY,* Novembre 2019, 4143-4157
- **M. LEBRUN et al.** *Implementation of the « Non-Local Bayes » (NL-Bayes) Image Denoising Algorithm*